# EUROPEAN PATENT APPLICATION

(11) **EP 2 631 140 A1**
(43) Date of publication of application: **28.08.2013**
(21) Application number: 11834444.9
(22) Date of filing: 20.10.2011
(51) Int. Cl.: B60W 10/10, B60K 6/48, B60K 6/547, B60W 10/18, B60W 20/00, F16H 59/54, F16H 61/16

(54) **VEHICLE, CONTROL METHOD, AND PROGRAM**

(30) Priority: 22.10.2010 JP 2010237798
(71) Applicant: Hino Motors Ltd., Tokyo 191-8660 (JP)
(72) Inventor: SAWAYAMA, Akira, Hino-shi Tokyo 191-8660 (JP)
(74) Representative: Skone James, Robert Edmund
(86) International application number: PCT/JP2011/074182
(87) International publication number: WO 2012/053605

(57) **Abstract**

In the present invention, a decrease in the amount of regeneration is prevented, and discomfort is not imparted to the driving sensation of a driver. A determination unit (31) determines whether or not a braking device is being operated by the driver. When decelerating while regenerating, a gear shifting control unit (32) controls the shift of gears of a gear box in a manner so as to suspend the shift of gears and continue regeneration when it has been determined that the braking device is being operated by the driver. The present invention can be applied to vehicles that can regenerate electric power by means of an electric motor when decelerating and that are driven by the electric motor and an internal combustion engine via an automatic gear box.

## Description

### {Technical Field}

The present invention relates to a vehicle, a control method, and a computer program.

### {Background Art}

A so-called hybrid vehicle that is driven by an internal combustion engine and an electric motor receives attention. For example, when the hybrid vehicle decelerates, the electric motor functions as an electric generator in order to perform an electric power regeneration (hereinafter, simply referred to as a regeneration) and store the electric power. The stored electric power is used for generating driving force, for example, when the vehicle accelerates or runs.

Some hybrid vehicles have a gear box configured to automatically shift gears. Hereinafter, the gear box is also referred to as a transmission.

A hybrid vehicle including a gear box configured to automatically shift gears (hereinafter, simply referred to as a vehicle) stops the regeneration during the gear shifting operation when the vehicle decelerates.

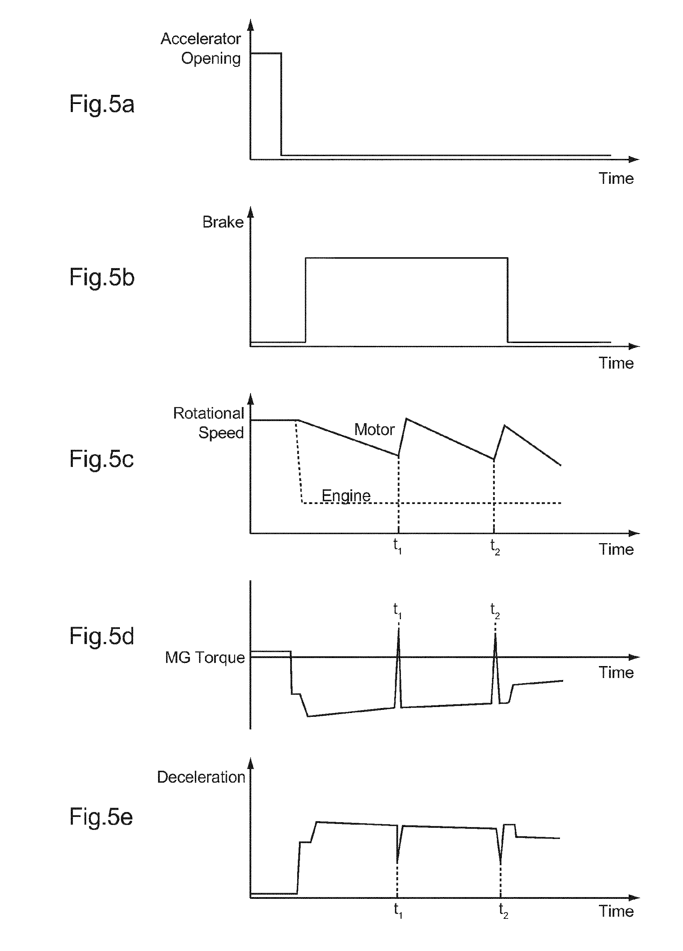

Fig. 5A to Fig. 5E are views for describing the gear shifting operation of a conventional vehicle when the vehicle decelerates. Fig. 5A illustrates an accelerator opening. Fig. 5B illustrates the amount of the brake operation. Fig. 5C illustrates the rotational speeds of the engine and the electric motor (motor). Fig. 5D illustrates the torque of the electric motor functioning as a motor generator. Fig. 5E illustrates the deceleration of the hybrid vehicle.

In other words, it is necessary to synchronize the rotational speed of the input side and the rotational speed of the output side of the transmission at the gear shifting operation in a gear box configured to automatically shift gears by putting the transmission in a neutral state (the state in which the input shaft and the output shaft of the transmission are disengaged from each other). At that time, putting the transmission in the neutral state disconnects the transfer of the driving force from the driving wheels to the electric motor of the vehicle. Thus, the regeneration is stopped at the electric motor.

The shift of gears is performed and the regeneration of the electric motor is stopped at a time t1 and a time t2 in Fig. 5A to Fig. 5E,

In some conventional vehicles, the driving force of the engine and the driving force of the electric motor can be transferred to the driving wheels of the vehicle through the gear box and the engine can mechanically be connected and disconnected to the gear box by the clutch. When an upper limit deceleration torque that is a deceleration torque capable of being generated by the electric motor is equal to or more than a requested deceleration torque that is a deceleration torque to be generated from the engine and the electric motor, the clutch is disengaged in order to control the electric motor to generate the request deceleration torque. On the other hand, when the upper limit deceleration torque is smaller than the requested deceleration torque, the clutch is engaged in order to control the engine and the electric motor so that the sum of the deceleration torque of the engine and the deceleration torque of the electric motor becomes the requested deceleration torque (for example, see patent literature PLT1).

### {Citation List}

### {Patent Literature}

PTL1: JP 2007-223421 A

### {Summary of Invention}

### {Technical Problem}

However, as illustrated in Fig. 5, the regeneration torque of the electric motor becomes a part of the braking force at the regeneration during the deceleration of the vehicle. Thus, stopping the regeneration of the electric motor during the deceleration of the vehicle reduces the braking force. This reduces the quantity of electricity obtained by the regeneration (the amount of regeneration).

For example, a vehicle automatically shifts the gears when decelerating to enter an intersection. The regeneration of the vehicle is temporarily stopped along with the gear shifting operation. The braking force is reduced by the amount according to the stop of the regeneration. The driver sometimes feels discomfort because the driver feels a so-called "sudden weakness" of the braking due to the decrease in the braking force.

Further, because the braking force is reduced, the sudden weakness of the braking force sometimes expands the track of the vehicle toward the outside (left side), for example, when the vehicle decelerates while the steering wheel is turned to the right in order to turn right in an intersection. Further, the driver sometimes feels that the track is expanded toward the outside (left side) even if the track is not changed.

In light of the foregoing, an objective of the present invention is to solve the above-mentioned problem or, in other words, to provide a vehicle, a control method, and a computer program that do not give discomfort to the driving sensation of a driver by preventing the decrease in the amount of regeneration.

### {Solution to Problem}

To solve the above-mentioned problem, according to an aspect of the present invention, a vehicle that is driven by an internal combustion engine and an electric motor through a gear box configured to automatically shift gears and that is capable of regenerating electric power by the electric motor when the vehicle decelerates, includes an apparatus comprising determination means for determining whether a braking device is operated by a driver and control means for controlling a shift of gears of the gear box to suspend the shift of gears and continue a regeneration when it is determined that the braking device is operated by the driver while the vehicle decelerates together with the regeneration.

In addition, in the vehicle according to another aspect of the present invention, the determination means may further determine according to a rotational speed of the internal combustion engine and a vehicle speed whether it is necessary to shift the gears of the gear box to a higher gear ratio, and determine whether the braking device is operated by the driver when it is determined that it is necessary to shift the gears of the gear box to a higher gear ratio, and the control means may control the shift of gears of the gear box to suspend the shift of gears and continue the regeneration when it is determined that that it is necessary to shift the gears of the gear box to a higher gear ratio and it is determined that the braking device is operated by the driver.

In addition, in the vehicle according to another aspect of the present invention, the control means may prohibit the suspension of the shift of gears when the vehicle is at a predetermined vehicle speed or less.

In addition, in the vehicle according to another aspect of the present invention, the control means may prohibit the suspension of the shift of gears when the vehicle runs at a down grade having a predetermined inclination angle or more, and may shift the gear ratio to a next higher gear ratio if the gear ratio of the gear at that time is not a highest gear ratio.

According to another aspect of the present invention, a control method for controlling a vehicle that is driven by an internal combustion engine and an electric motor through a gear box configured to automatically shift gears and that is capable of regenerating electric power by the electric motor when the vehicle decelerates, includes the steps of: determining whether a braking device is operated by a driver; and controlling a shift of gears of the gear box to suspend the shift of gears and continue a regeneration when it is determined that the braking device is operated by the driver while the vehicle decelerates together with the regeneration.

According to still another aspect of the present invention, a computer program causes a computer for controlling a vehicle that is driven by an internal combustion engine and an electric motor through a gear box configured to automatically shift gears and that is capable of regenerating electric power by the electric motor when the vehicle decelerates to perform a process including the steps of determining whether a braking device is operated by a driver and controlling a shift of gears of the gear box to suspend the shift of gears and continue a regeneration when it is determined that the braking device is operated by the driver while the vehicle decelerates together with the regeneration.

### {Advantageous Effects of Invention}

According to an aspect of the present invention, a vehicle, a control method, and a computer program that do not give discomfort to the driving sensation of a driver by preventing the decrease in the amount of regeneration can be provided.

### {Brief Description of Drawings}

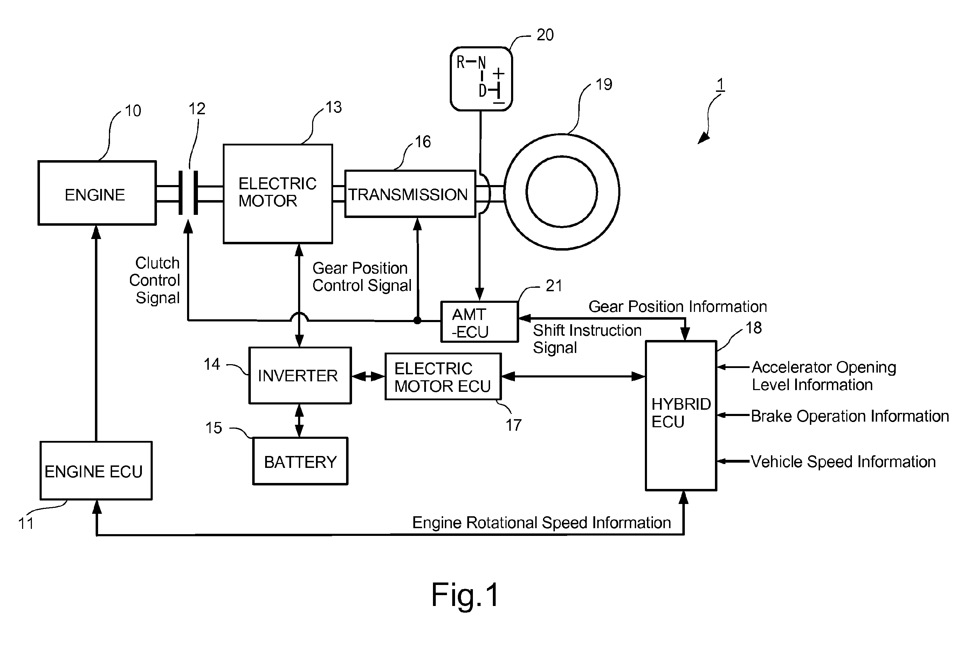

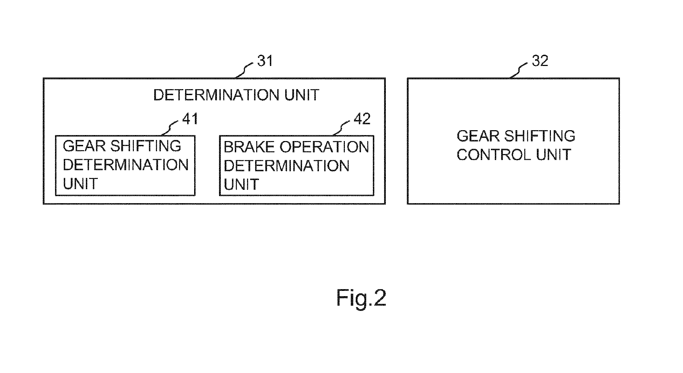

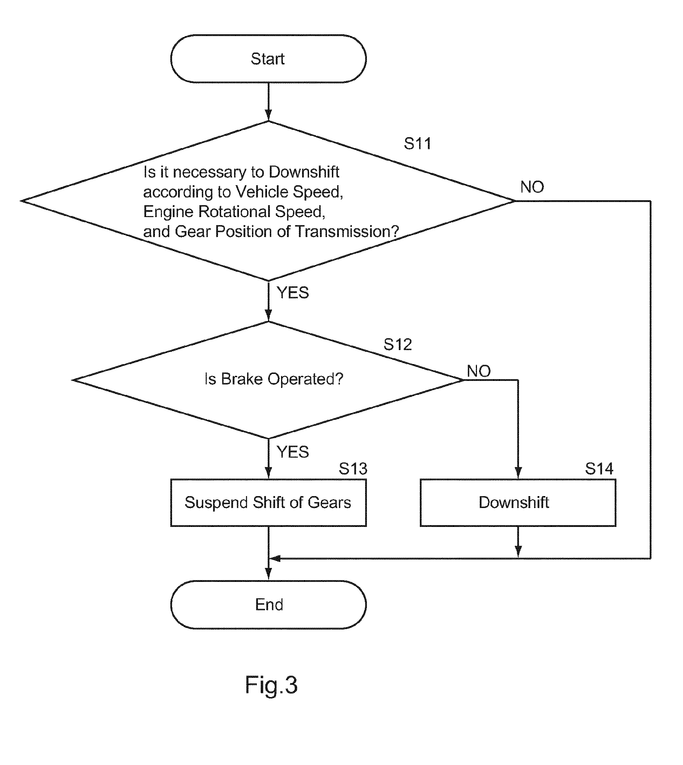

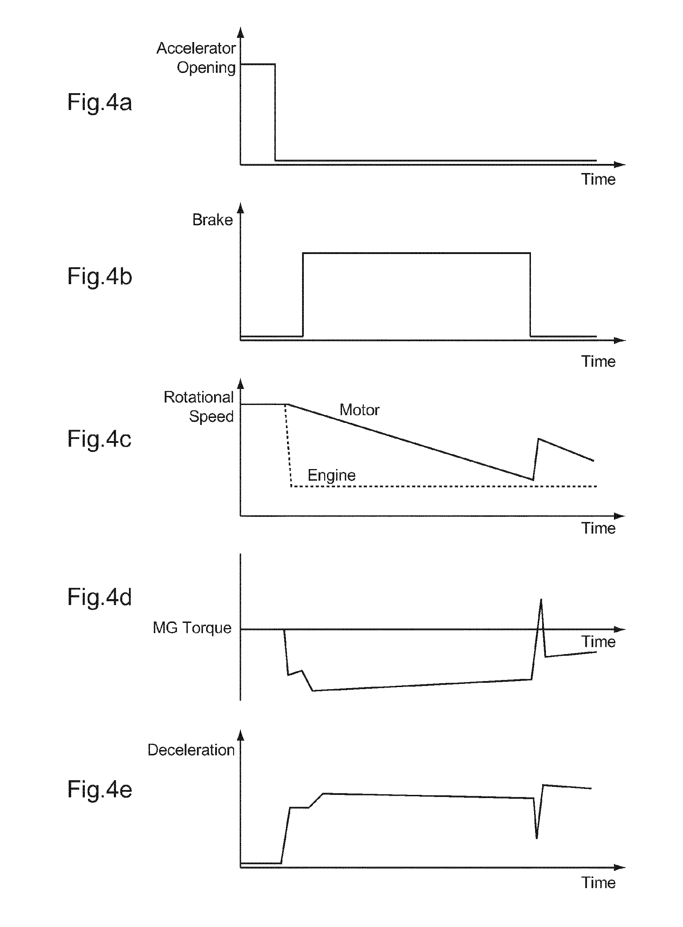

{Fig. 1} Fig. 1 is a block diagram for illustrating an exemplary structure of a hybrid vehicle 1.
{Fig. 2} Fig. 2 is a block diagram for illustrating an exemplary configuration of a function implemented in a hybrid ECU 18.
{Fig. 3} Fig. 3 is a flowchart for describing a process of a gear shifting operation.
{Fig. 4} Figs. 4A to 4E are views for describing the gear shifting operation of the hybrid
{Fig. 5} Figs. 5A to 5E are views for describing the gear shifting operation of a conventional vehicle when the vehicle decelerates.

### {Description of Embodiments}

Hereinafter, a hybrid vehicle according to an embodiment of the present invention will be described with reference to Figs. 1 to 4.

Fig. 1 is a block diagram for illustrating an exemplary structure of a hybrid vehicle 1. The hybrid vehicle 1 is an example of a vehicle. The hybrid vehicle 1 is driven by an internal combustion engine and/or an electric motor through a gear box configured to automatically shift gears. For example, when the vehicle decelerates, the electric power can be regenerated by the electric motor. The gear box configured to automatically shift gears is, for example, referred to as an Automated Mechanical/Manual Transmission (AMT). The transmission can automatically shift the gears while having the same structure as a manual transmission. In other words, in the automated mechanical/manual transmission, according to the shift instruction signal from a hybrid ECU 18, an AMT-ECU 21 automatically controls the operation of a clutch 12 and the shifting gear operation that is operated by the driver's operation of a clutch pedal at a manual transmission, and the shifting gear operation. When the shift of gears is performed, a transmission 16 is put in a neutral state (the state in which the input shaft and the output shaft of the transmission 16 are disengaged from each other) and the gear shifting operation is performed. Note that, if the clutch 12 is in an engaged state and the vehicle runs only by an engine 10 or by the cooperation between the engine 10 and an electric motor 13 and then the gear shifting operation is performed, the temporary disengagement of the clutch 12 is automatically performed in order to shift the gears of the transmission 16.

The hybrid vehicle 1 includes the engine 10, an engine Electronic Control Unit (ECU) 11, the clutch 12, the electric motor 13, an inverter 14, a battery 15, the transmission 16, a motor ECU 17, a hybrid ECU 18, a wheel 19, a shift unit 20, and the AMT-ECU 21. Note that the transmission 16 includes the above-mentioned automated mechanical/manual transmission and is operated by the shift unit 20 including a drive range (hereinafter, referred to as a D (Drive) range).

The engine 10 is an example of an internal combustion engine, and is controlled by the engine ECU 11. The engine 10 internally combusts gasoline, light oil, Compressed Natural Gas (CNG), Liquefied Petroleum Gas (LPG), alternative fuel, or the like in order to generate power for rotating a shaft and transfer the generated power to the clutch 12.

The engine ECU 11 is a computer working in coordination with the motor ECU 17 according to the instructions from the hybrid ECU 18, and controls the engine 10, for example, the amount of fuel injection and the valve timing. For example, the engine ECU 11 includes a Central Processing Unit (CPU), an Application Specific Integrated Circuit (ASIC), a microprocessor (micro-computer), a Digital Signal Processor (DSP), and the like, and internally has an operation unit, a memory, an Input/Output (I/O) port, and the like.

The clutch 12 is controlled by the AMT-ECU 21, and transfers the shaft output from the engine 10 to the wheel 19 through the electric motor 13 and the transmission 16. In other words, the clutch 12 mechanically connects the rotating shaft of the engine 10 to the rotating shaft of the electric motor 13 by the control of the AMT-ECU 21 in order to transfer the shaft output of the engine 10 to the electric motor 13. On the other hand, the clutch 12 cuts the mechanical connection between the rotating shaft of the engine 10 and the rotating shaft of the electric motor 13 so that the shaft of the engine 10 and the rotating shaft of the electric motor 13 can rotate at different rotational speeds from each other.

For example, the clutch 12 mechanically connects the rotating shaft of the engine 10 to the rotating shaft of the electric motor 13, for example, when the hybrid vehicle 1 runs by the power of the engine 10 and this causes the electric motor 13 to generate electric power, when the driving force of the electric motor 13 assists the engine 10, and when the electric motor 13 starts the engine 10.

Alternatively, for example, the clutch 12 cuts the mechanical connection between the rotating shaft of the engine 10 and the rotating shaft of the electric motor 13 when the engine 10 stops or is in an idling state and the hybrid vehicle 1 runs by the driving force of the electric motor 13, and when the hybrid vehicle 1 decelerates or runs on the down grade and the electric motor 13 generates electric power (regenerates electric power) while the engine 10 stops or is in an idling state.

Note that, although only two clutch plates facing to each other are illustrated as the clutch 12 in Fig. 1 for symbolically illustrating the clutch 12, the clutch 12 actually includes a receiving circuit for receiving a clutch control signal from the AMT-ECU 21, and a clutch plate driving mechanism for engaging and disengaging the two clutch plates facing to each other based on the received clutch control signal.

The electric motor 13 is a so-called motor generator that supplies a shaft output to the transmission 16 by generating the power for rotating the shaft using the electric power supplied from the inverter 14, or that supplies electric power to the inverter 14 by generating the electric power using the power for rotating the shaft supplied from the transmission 16. For example, when the hybrid vehicle 1 accelerates or runs at a constant speed, the electric motor 13 generates the power for rotating the shaft to supply the shaft output to the transmission 16 in order to cause the hybrid vehicle 1 to run in cooperation with the engine 10. Further, the electric motor 13 works as an electric generator, for example, when the electric motor 13 is driven by the engine 10, or when the hybrid vehicle 1 runs without power, for example, the hybrid vehicle 1 decelerates or runs on the down grade. In that case, electric power is generated by the power for rotating the shaft supplied from the transmission 16 and is supplied to the inverter 14 in order to charge the battery 15.

The inverter 14 is controlled by the motor ECU 17, and converts the direct voltage from the battery 15 into an alternating voltage or converts the alternating voltage from the electric motor 13 into a direct voltage. When the electric motor 13 generates power, the inverter 14 converts the direct voltage of the battery 15 into an alternating voltage and supplies the electric power to the electric motor 13. When the electric motor 13 generates electric power, the inverter 14 converts the alternating voltage from the electric motor 13 into a direct voltage. In other words, in that case, the inverter 14 works as a rectifier and a voltage regulator for supplying a direct voltage to the battery 15.

The battery 15 is a secondary cell capable of being charged and discharged. The battery 15 supplies electric power to the electric motor 13 through the inverter 14 when the electric motor 13 generates power. Alternatively, the battery 15 is charged with the electric power generated by the electric motor 13 when the electric motor 13 generates electric power.

The transmission 16 includes an automated mechanical/manual transmission that selects one of a plurality of gear ratios (change gear ratios) according to the gear position control signal from the AMT-ECU 21 in order to shift the change gear ratios and transfer the gear-shifted power of the engine 10 and/or of the electric motor 13 to the wheel 19. Alternatively, the transmission 16 transfers the power from the wheel 19 to the electric motor 13, for example, when the vehicle decelerates or runs on the down grade. Note that the automated mechanical/manual transmission can also shift the gear position to a given gear number by the driver's hand operation of the shift unit 20.

The motor ECU 17 is a computer working in coordination with the engine ECU 11 according to the instructions from the hybrid ECU 18, and controls the electric motor 13 by controlling the inverter 14. For example, the motor ECU 17 includes a CPU, an ASIC, a microprocessor (micro-computer), a DSP, and the like, and internally has an operation unit, a memory, an I/O port, and the like.

The hybrid ECU 18 is an example of a computer. The hybrid ECU 18 obtains accelerator opening information, brake operation information, vehicle speed information, gear position information and engine rotational speed information. The hybrid ECU 18 refers to the obtained information and, for example, transfers the shift instruction signal to the AMT-ECU 21 in order to control the clutch 12 and the transmission 16. Thus, the hybrid ECU 18 controls the clutch 12 and the shift of gears of the transmission 16 (change the gear positions) through the AMT-ECU 21. The hybrid ECU 18 further gives the control instructions of the electric motor 13 and the inverter 14 to the motor ECU 17, and gives the control instruction of the engine 10 to the engine ECU 11. For example, the hybrid ECU 18 includes a CPU, an ASIC, a microprocessor (micro-computer), a DSP, and the like, and internally has an operation unit, a memory, an I/O port, and the like.

Note that a computer program to be executed by the hybrid ECU 18 can be installed on the hybrid ECU 18 that is a computer in advance by being stored in a non-volatile memory inside the hybrid ECU 18 in advance.

The engine ECU 11, the motor ECU 17, the hybrid ECU 18, and the AMT-ECU 21 are connected to each other, for example, through a bus complying with the standard of the Control Area Network (CAN) or the like.

The wheel 19 is a drive wheel for transferring the driving force to the road surface. Note that, although only a wheel 19 is illustrated in Fig. 1, the hybrid vehicle 1 actually includes a plurality of the wheels 19.

The shift unit 20 gives the instruction from the driver to the AMT-ECU 21. When the shift unit 20 is at the D range, the gear shifting operation of the automated mechanical/manual transmission (the selection of the gear position and the engagement and disengagement of the clutch 12) is automated. The driver can change the gear shifting operation of the automated mechanical/manual transmission to a hand operation by shifting the shift unit 20 to a position other than the D range.

The AMT-ECU 21 transfers the gear position control signal to the transmission 16 according to the shift instruction signal from the hybrid ECU 18 in order to change the gear position of the transmission 16. Further, the AMT-ECU 21 transfers the clutch control signal to the clutch 12 in order to temporarily disengage the clutch 12 before the gear position of the transmission 16 is changed, and engage the clutch 12 again after the change of the gear position is completed.

Fig. 2 is a block diagram for illustrating an exemplary configuration of a function implemented in the hybrid ECU 18 that executes a computer program. In other words, once the hybrid ECU 18 executes a computer program, a determination unit 31 and a shift control unit 32 are implemented. The determination unit 31 determines whether a brake (braking device) is operated, and whether it is necessary to shift the gears of the transmission 16 to a higher gear ratio. The determination unit 31 includes a shift determination unit 41 and a brake operation determination unit 42. The shift determination unit 41 determines, according to the rotational speed of the engine 10 and the vehicle speed, whether it is necessary to shift the gears of the transmission 16 to a higher gear ratio. The brake operation determination unit 42 determines whether the brake (braking device) is operated by the driver.

The shift control unit 32 transfers the shift instruction signal to the AMT-ECU 21 in order to control the shift of gears of the transmission 16.

Next, a process of the shift control performed in the hybrid ECU 18 executing a computer program will be described with reference to a flowchart illustrated in Fig. 3. As a precondition to perform the process of the flowchart illustrated in Fig. 3, the hybrid vehicle 1 decelerates while regenerating. At that time, the clutch 12 can be in the engaged state or in the disengaged state. In other words, when the clutch 12 is in the engaged state, both of the engine braking caused by the friction torque of the engine 10 and the regeneration torque of the electric motor 13 work as the decelerating force of the hybrid vehicle 1. Further, when the clutch 12 is in the disengaged state, the regeneration torque of the electric motor 13 works as the decelerating force of the hybrid vehicle 1. Note that the process of the shift control is repeated at predetermined time intervals.

In step S11, the shift determination unit 41 of the determination unit 31 obtains the engine rotational speed information indicating the rotational speed of the engine 10 from the engine ECU 11, obtains the gear position information indicating the gear position (one of the gear shifting numbers or a change gear ratio) of the transmission 16 from the AMT-ECU 21, and obtains the vehicle speed information indicating the vehicle speed (running speed) of the hybrid vehicle 1. The shift determination unit 41 determines according to the vehicle speed, the rotational speed of the engine 10, and the gear position of the transmission 16 indicated by the vehicle speed information, the engine rotational speed information, and the gear position information, respectively, whether it is necessary to shift the gears of the transmission 16 to a higher gear ratio or, namely, whether it is necessary to downshift.

When it is determined in step S11 that it is necessary to downshift, the process goes to step S12, and the brake operation determination unit 42 of the determination unit 31 obtains the brake operation information indicating the state of the brake operation, for example, that the brake pedal is depressed. The brake operation determination unit 42 determines according to the state of the brake operation indicated by the brake operation information whether the brake is operated by the driver, for example, the brake pedal is depressed.

When it is determined in step S12 that the brake is operated by the driver, for example, the brake pedal is depressed, the process goes to step S13, and the shift control unit 32 suspends the shift of gears in order not to downshift. In other words, in step S13, the shift control unit 32 instructs the AMT-ECU 21 to suspend the shift of gears of the transmission 16. Then, the process of the shift control is completed.

On the other hand, when it is determined in step S12 that the brake is not operated by the driver, for example, the brake pedal is not depressed, the process goes to step S14, and the shift control unit 32 instructs the AMT-ECU 21 to downshift the transmission 16. Then, the process of the shift control is completed.

When it is determined in step S11 that it is not necessary to downshift, the process of the gear shifting control is completed without the shift of gears because the processes in step S12 and later are not required.

Fig. 4A to Fig. 4E are views for describing the gear shifting operation of the hybrid vehicle 1 when the vehicle decelerates. Fig. 4A illustrates the accelerator opening. Fig. 4B illustrates the amount of the brake operation. Fig. 4C illustrates the rotational speeds of the engine 10 and the electric motor 13. Fig. 4D illustrates the torque of the electric motor 13 functioning as a motor generator. Fig. 4E illustrates the deceleration of the hybrid vehicle 1.

As illustrated in Fig. 4B, while the brake is operated by the driver, for example, the brake pedal is depressed, the downshift of the transmission 16 is suspended. In other words, when the brake is operated, the gear shifting operation is prohibited.

As a result, the state in which the regeneration is interrupted is avoided while the brake is operated by the driver as illustrated in Fig. 4D and Fig. 4E. The deceleration is not interrupted, so that discomfort is not imparted to the driving sensation of the driver.

Further, the regeneration is not interrupted, so that the decrease in the amount of regeneration is prevented. This can contribute to improvement of fuel efficiency.

As described above, the decrease in the amount of regeneration is prevented, and this can prevent discomfort from being imparted to the driving sensation of the driver.

Note that, although the engine 10 has been described as an internal combustion engine, the engine 10 can also be a heat engine including an external combustion engine.

Further, while the computer program executed by the hybrid ECU 18 is installed on the hybrid ECU 18 in advance in the description above, the computer program can be installed on the hybrid ECU 18 as a computer by attaching removable media recording the computer program (storing the computer program), for example, to a drive (not shown in the drawings) and storing the computer program read from the removable media in a non-volatile memory inside the hybrid ECU 18, or receiving, by a communication unit (not shown in the drawings), a computer program transmitted through a wired or wireless transmission medium and storing the computer program in a non-volatile memory inside the hybrid ECU 18.

Further, each ECU can be implemented by an ECU combining some or all of the functions of the ECUs. Alternatively, an ECU can newly be provided by the further subdivision of the function of each ECU.

Note that the computer program executed by the computer can be for performing the process in chronological order according to the order described herein or can be for performing the process in parallel or at the necessary timing, for example, when the computer program is invoked.

Further, the hybrid ECU 18 can prohibit the suspension of the shift of gears when the vehicle speed of the hybrid vehicle 1 is equal to or less than a predetermined vehicle speed. For example, when the vehicle speed of the hybrid vehicle 1 is equal to or less than 10 kilometers per hour, the driver seldom feels discomfort (for example, the shock of the deceleration) even if a shift of gears is performed. Thus, there is not a problem if the suspension of the shift of gears is prohibited at such a low speed. Keeping the gear number at a high number can be avoided when the vehicle speed further decreases.

Further, the hybrid ECU 18 prohibits the suspension of the shift of gears when the vehicle runs on the down grade having a predetermined inclination angle or more. If the gear ratio of the gear at that time is not the highest gear ratio, the gear ratio can be shifted to a next higher gear ratio. For example, when the hybrid vehicle 1 runs on a steep down grade, the acceleration is large and the driver seldom feels discomfort (for example, the shock of the deceleration) even if a shift of gears is performed. Thus, there is not a problem if the suspension of the shift of gears is prohibited in such a case. It is preferable to strongly make engine braking efficient by shifting the gears to a gear number having a higher gear ratio when the hybrid vehicle 1 runs on a steep down grade, and it is possible to do so.

Further, the embodiments of the present invention are not limited to the above-mentioned embodiments, and can be variously modified without departing from the gist of the invention.

### {Reference Signs List}

- 1: Hybrid vehicle
- 10: Engine
- 11: Engine ECU
- 12: Clutch
- 13: Electric motor
- 14: Inverter
- 15: Battery
- 16: Transmission
- 17: Motor ECU
- 18: Hybrid ECU
- 19: Wheel
- 21: AMT-ECU
- 31: Determination unit
- 32: Shift control unit
- 41: Shift determination unit
- 42: Brake operation determination unit

## Claims

1. A vehicle that is driven by an internal combustion engine and an electric motor through a gear box configured to automatically shift gears and that is capable of regenerating electric power by the electric motor when the vehicle decelerates, the vehicle comprising an apparatus including:
determination means for determining whether a braking device is operated by a driver; and
control means for controlling a shift of gears of the gear box to suspend the shift of gears and continue a regeneration when it is determined that the braking device is operated by the driver while the vehicle decelerates together with the regeneration.

2. The vehicle according to claim 1,
wherein the determination means further determines according to a rotational speed of the internal combustion engine and a vehicle speed whether it is necessary to shift the gears of the gear box to a higher gear ratio, and determines whether the braking device is operated by the driver when it is determined that it is necessary to shift the gears of the gear box to a higher gear ratio, and
the control means controls the shift of gears of the gear box to suspend the shift of gears and continue the regeneration when it is determined that that it is necessary to shift the gears of the gear box to a higher gear ratio and it is determined that the braking device is operated by the driver.

3. The vehicle according to claim 1 or 2,
wherein the control means prohibits the suspension of the shift of gears when the vehicle runs at a predetermined vehicle speed or less.

4. The vehicle according to any of claims 1 to 3,
wherein the control means prohibits the suspension of the shift of gears when the vehicle runs at a down grade having a predetermined inclination angle or more, and shifts the gear ratio to a next higher gear ratio if the gear ratio of the gear at that time is not a highest gear ratio.

5. A control method for controlling a vehicle that is driven by an internal combustion engine and an electric motor through a gear box configured to automatically shift gears and that is capable of regenerating electric power by the electric motor when the vehicle decelerates, the control method comprising the steps of:
determining whether a braking device is operated by a driver; and
controlling a shift of gears of the gear box to suspend the shift of gears and continue a regeneration when it is determined that the braking device is operated by the driver while the vehicle decelerates together with the regeneration.

6. A computer program for causing a computer for controlling a vehicle that is driven by an internal combustion engine and an electric motor through a gear box configured to automatically shift gears and that is capable of regenerating electric power by the electric motor when the vehicle decelerates to perform a process comprising the steps of:
determining whether a braking device is operated by a driver; and
controlling a shift of gears of the gear box to suspend the shift of gears and continue a regeneration when it is determined that the braking device is operated by the driver while the vehicle decelerates together with the regeneration.
